# EUROPEAN PATENT SPECIFICATION

(11) **EP 1 714 738 B1**
(45) Date of publication and mention of the grant of the patent: **20.08.2008**
(21) Application number: 06380077.5
(22) Date of filing: 11.04.2006
(51) Int. Cl.: B24B 27/00, B23Q 1/00, B23Q 7/02, B23Q 39/04

(54) **Transfer machine with rotary table for the surface treatment of workpieces**
Transfermaschine mit Drehtisch zur Oberflächenbearbeitung von Werkstücken
Machines de transfert avec tables rotatives pour le traitement de la surface d'objets à usiner

(30) Priority: 18.04.2005 ES 200500920
(43) Date of publication of application: 25.10.2006
(73) Proprietor: Tecnologies Aplicades a Muntatges Electro-Mecanica, S.L.L., 08271 Artes (Barcelona) (ES)
(72) Inventor: Murt Coma, Joan, 98271 Artes (Barcelona) (ES)
(74) Representative: Durán Moya, Luis-Alfonso

(56) References cited:
- EP-A- 0 043 584
- GB-A- 2 364 661
- US-A1- 2002 019 203

## Description

This invention relates to a device for the surface treatment of workpieces, as per the preamble of claim 1. An example of such a device is known from GB 2 364 661 A.

In particular this invention relates to devices for the surface treatment of workpieces which comprise a plurality of workpiece-holder units located on a rotary table, a plurality of surface treatment stations which have the ability to move and a plurality of motor means to provide the workpieces located on the workpiece-holder units with the ability to rotate with respect to the rotary table.

Two embodiments of this class of devices are known. One type consists of using motors powered via brushes, for example graphite brushes. This embodiment has the disadvantage that the brushes are subject to wear and as a consequence accuracy of movement for the workpiece-holder unit is lost.

Another known type of embodiment uses motors of the brushless type by means of which the workpiece can be positioned very precisely by the workpiece-holder unit, but these have the disadvantage that the power supply to the motor has to be very well defined, as a result of which these motors are fixed to the base and do not rotate together with the rotary table, the workpiece-holder units being coupled to the motors in order to carry out the surface treatment operations and detached in order to permit the rotary table to rotate. These devices have the disadvantage that the workpiece-holder unit is disconnected from the motor means during movement between surface treatment stations, as a result of which it is not possible to alter the orientation of the workpieces while the table is in rotary movement, and this gives rise to a loss of time. An example of such a device is known from US 2002/0019203 A1. Furthermore, although this embodiment has greater accuracy when orientating the workpiece than the previous embodiment, there is still a small inaccuracy associated with the mechanical coupling between the motor and the workpiece-holder unit.

Yet another type is known from GB 2 364 661 A. To overcome the drawbacks with the precision of control and the supply of power of the previously described known embodiments, it discloses a device according to the preamble of claim 1, in which the table cannot rotate completely. In an operative direction, the table moves from work station to work station by stepwise rotation, having completed the operative angle, the table returns to the original position in a continuous rotation without stopping.

Through many tests and investigations this inventor has produced a surface treatment device through which the workpiece can be orientated more accurately at the same time as achieving a greater working speed than in the case of known surface treatment devices, and which has none of the abovementioned disadvantages.

This is accomplished according to this invention through a device of the abovementioned type which has at least one rotary connector or joint capable of transmitting signals in data communication using a communications protocol through which power is transmitted to at least one of the aforesaid motor means.

Preferably the rotary connector or joint is a single item and is located at the centre of rotation of the rotary wheel.

The device to which this invention relates makes it possible to use motors of the brushless type which are of one piece with the workpiece-holder units.

Drawings of a preferred embodiment of this invention are provided for a better understanding thereof, by way of an explanatory but non-restrictive example.

Figure 1 is a plan view from above of a device according to this invention, in particular of a rotary polishing machine in which the assembly of the rotary table and a plurality of polishing stations can be seen. Components which cannot be seen have been shown in the figure by a dashed line.

Figure 2 is a frontal elevation view in partial cross-section of the machine in Figure 1, in such a way that the internal components located beneath the rotary table can be seen.

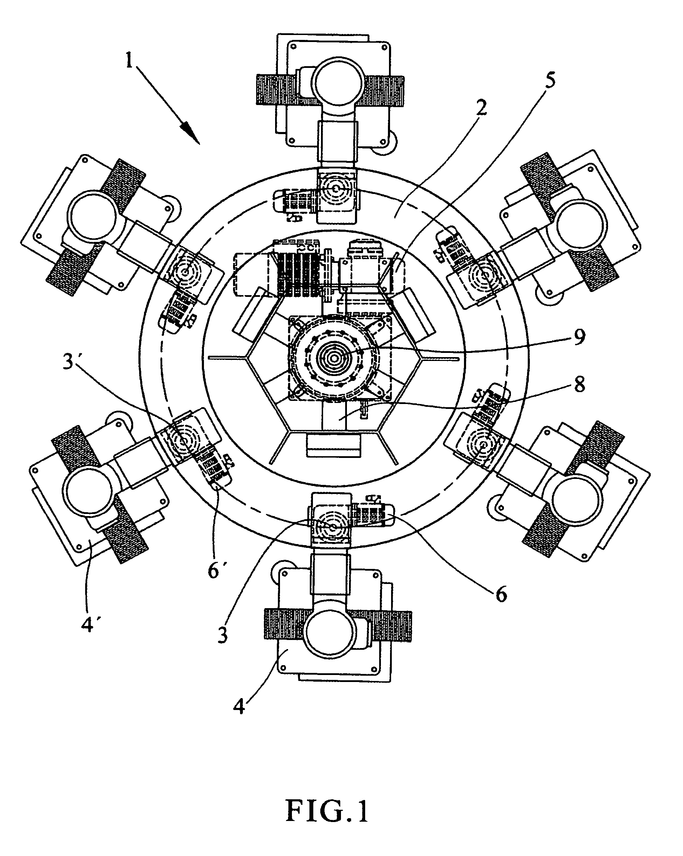

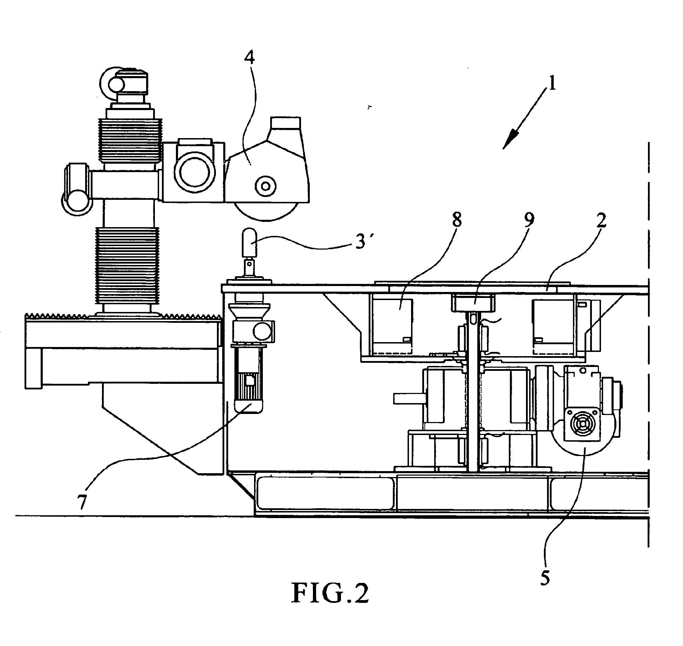

Figures 1 and 2 show a device -1- for the surface treatment of workpieces. In this case the device illustrated is a rotary polishing machine which comprises a rotary table -2- on which are located a plurality of workpiece-holder units -3-, -3'-, etc., on which the workpieces are located. Around rotary table -2- there is a plurality of surface treatment stations -4-, -4'-, etc., which in this case are polishing stations.

When in use, as a result of rotation of the rotary table each workpiece located in a workpiece holder -3-, -3'-, etc., is located opposite each polishing station -4-, -4'-, etc. In this way each workpiece positioned in a workpiece-holder unit -3-, -3'-, etc., will pass in succession through the various surface treatment stations -4-, -4'-, etc., until the various surface treatment operations which it is desired to perform on the piece have been completed.

In the embodiment illustrated the rotation of rotary table -2- is brought about through an indexer table -5- of the commercial type, although any known means may be used for the purpose, such as for example a toothed crown wheel and drive assembly, or any other means.

Each workpiece-holder unit -3-, -3'-, etc., has associated motor means -6,-6'-,..., -7-, etc., to provide the workpieces located on workpiece-holder units -3-, -3'-, etc., with the ability to rotate with respect to rotary table -2-. The purpose of these means is to vary the orientation of the workpiece at each surface treatment station -4-, -4'-, etc. In the situation illustrated each workpiece-holder unit -3- has two servomotors -6-, -7-, perpendicular to each other, located therebeneath, and integral with it, the combination being capable of providing the workpiece with rotation with respect to two, vertical and horizontal, axes of rotation respectively. The motors may require corresponding speed reducers or servoamplifiers -8-. Servoamplifiers -8- may be incorporated in the corresponding motors or fitted separately, either on the moving part of rotary table -2- or on a part which is separate therefrom.

This invention provides that the power supply to servomotors -6-, -7- is transmitted from the fixed part to the moving part of device -1- through rotary joints or connectors -9-, the number of which may vary in relation to the needs of each particular application. In particular it will be possible for various servomotors to share the same rotary joint or connector -9-, as is the case in the embodiment illustrated in the figures. In order to permit accurate and correct control of the orientation of the workpieces the said rotary connectors -9- through which power is transmitted are of a type suitable for the transmission of signals in data communication through a communications protocol. An example of a rotary joint of this type is the model SM034 marketed by the company LTN Servotechnik GmbH. In the case illustrated the power passing from the static part of the device, for example, of a control cabinet (not shown) to the rotating part on which servomotors -6-,-7- are located feeds servoamplifiers -8- which in turn supply power to servomotors -6-, -7-.

Servomotors -6-, -7- are controlled for example through any field bus through which control may be effected. In particular it may bring about control of workpiece-holder units -3-, -3'-, etc., through reading information relating to the servoamplifiers (speed, position, etc.) via a field bus, such as for example the bus known as CANOpen. Transmission of control information from the static part to the moving part of device -1- and vice versa can be brought about by means similar to those used for the transmission of power. In particular, in particular cases it will be possible to transmit power and control information through a single rotary joint.

Those skilled in the art will be able to vary the embodiment illustrated in various ways without going beyond the scope of the claims. Purely by way of example, the number of servomotors per workpiece-holder unit or the mounting of the motors (direct mounting, mounting through a speed reducer, etc.) may be varied. Likewise surface treatment stations of a different nature may be combined in the same machine.

## Claims

1. A device (1) for the surface treatment of workpieces, which comprises a plurality of workpieceholder units (3,3') located on a rotary table (2) a plurality of surface treatment stations (4,4') with the ability to move and a plurality of motor means (6,6:7) to provide the workpieces located on the workpiece-holder units with the ability to rotate with respect to the rotary table, **characterised in that** it has at least one rotary connector or joint (9) suitable for transmitting signals in data communication through a communications protocol through which **connector** power is transmitted to at least one of the said motor means.

2. A device according to claim 1, **characterised in that** the rotary connector or joint (9), or rotary connectors or joints, are located at the centre of rotation of the rotary table (2).

3. Device according to claim 1 or 2, **characterised in that** the motor means (6,6:7) comprise motors of the brushless type.

4. Device according to any one of claims 1 to 3, **characterised in that** the motor means (6,6:7) are of one piece with the workpiece-holder units.

5. A device according to any one of claims 1 to 4, **characterised in that** the workpiece-holder units (3,3') allow the workpiece located on the workpiece-holder unit to rotate about two axes of rotation.

6. A device according to any one of claims 1 to 5, **characterised in that** the surface treatment comprises the operations of polishing and/or grinding and/or deburring.

7. A device according to any one of claims 1 to 6, **characterised in that** the number of rotary joints (9) for the transmission of power from the said motor means is less than the number of said motor means (6,6:7).

8. A device according to claim 7 **characterised in that** it comprises a single joint (9) for the transmission of power and control.

## Patentansprüche

1. Vorrichtung (1) für die Oberflächenbehandlung von Werkstücken, die mehrere Werkstück-Halteeinheiten (3, 3'), die sich an einem Drehtisch (2) befinden, mehrere Oberflächenbehandlungsstationen (4, 4'), die sich bewegen können, und mehrere Motormittel (6, 6', 7), die den Werkstücken, die sich auf den Werkstück-Halteeinheiten befinden, ermöglichen, sich in Bezug auf den Drehtisch zu drehen, umfasst, **dadurch gekennzeichnet, dass** sie wenigstens einen Drehverbinder oder ein Drehgelenk (9) besitzt, der bzw. das Signale in einer Datenkommunikation mittels eines Kommunikationsprotokolls übertragen kann, wodurch Verbinderleistung an wenigstens eines der Motormittel übertragen wird.

2. Vorrichtung nach Anspruch 1, **dadurch gekennzeichnet, dass** der Drehverbinder oder das Drehgelenk (9) oder Drehverbinder oder Drehgelenke sich im Drehzentrum des Drehtisches (2) befinden.

3. Vorrichtung nach Anspruch 1 oder 2, **dadurch gekennzeichnet, dass** die Motormittel (6, 6', 7) Motoren des bürstenlosen Typs umfassen.

4. Vorrichtung nach einem der Ansprüche 1 bis 3, **dadurch gekennzeichnet, dass** die Motormittel (6, 6', 7) einteilig mit den Werkstück-Halteeinheiten ausgebildet sind.

5. Vorrichtung nach einem der Ansprüche 1 bis 4, **dadurch gekennzeichnet, dass** die Werkstück-Halteeinheiten (3, 3') dem auf der jeweiligen Werkstück-Halteeinheit befindlichen Werkstück ermöglichen, sich um zwei Drehachsen zu drehen.

6. Vorrichtung nach einem der Ansprüche 1 bis 5, **dadurch gekennzeichnet, dass** die Oberflächenbehandlung Polier- und/oder Schleif- und/oder Entgratungsvorgänge umfasst.

7. Vorrichtung nach einem der Ansprüche 1 bis 6, **dadurch gekennzeichnet, dass** die Anzahl von Drehgelenken (9) für die Übertragung von Leistung von den Motormitteln geringer ist als die Anzahl der Motormittel (6, 6', 7).

8. Vorrichtung nach Anspruch 7, **dadurch gekennzeichnet, dass** sie ein einziges Gelenk (9) für die Leistungsübertragung und die Steuerung umfasst.

## Revendications

1. Dispositif (1) pour le traitement de surface de pièces à usiner, qui comprend une pluralité d'unités de support de pièce à usiner (3, 3') situés sur une table rotative (2), une pluralité de stations de traitement de surface (4, 4') avec la capacité de se déplacer et une pluralité de moyens moteurs (6, 6', 7) pour fournir aux pièces à usiner situées sur les unités de support de pièce à usiner la capacité de tourner par rapport à la table rotative, **caractérisée en ce qu'**il comprend au moins un connecteur ou joint rotatif (9) adapté pour transmettre des signaux en communication de données à travers un protocole de communication à travers lequel l'énergie de connecteur est transmise à au moins un desdits moyens moteurs.

2. Dispositif selon la revendication 1, **caractérisé en ce que** le connecteur ou joint rotatif (9), ou les connecteurs ou joints rotatifs, est/sont situé(s) au centre de rotation de la table rotative (2).

3. Dispositif selon la revendication 1 ou 2, **caractérisé en ce que** les moyens moteurs (6, 6', 7) comprennent des moteurs du type sans balai.

4. Dispositif selon l'une quelconque des revendications 1 à 3, **caractérisé en ce que** les moyens moteurs (6, 6', 7) sont d'une pièce avec les unités de support de pièce à usiner.

5. Dispositif selon l'une quelconque des revendications 1 à 4, **caractérisé en ce que** les unités de support de pièce à usiner (3, 3') permettent à la pièce à usiner située sur l'unité de support de pièce à usiner de tourner autour de deux axes de rotation.

6. Dispositif selon l'une quelconque des revendications 1 à 5, **caractérisé en ce que** le traitement de surface comprend les opérations de polissage et/ou meulage et/ou ébarbage.

7. Dispositif selon l'une quelconque des revendications 1 à 6, **caractérisé en ce que** le nombre de joints rotatifs (9) pour la transmission d'énergie à partir desdits moyens moteurs est inférieur au nombre desdits moyens moteurs (6, 6', 7).

8. Dispositif selon la revendication 7, **caractérisé en ce qu'**il comprend un unique joint (9) pour la transmission de l'énergie et la commande.
